# EUROPEAN PATENT SPECIFICATION

(11) **EP 2 572 914 B1**
(45) Date of publication and mention of the grant of the patent: **21.10.2015**
(21) Application number: 12185833.6
(22) Date of filing: 25.09.2012
(51) Int. Cl.: B60J 10/00, B60J 10/04, B29C 65/08, B60R 13/04

(54) **Moulding for vehicle and method for attaching moulding end cap**
Spritzteil für Fahrzeug und Verfahren zum Befestigen einer gespritzten Endkappe
Pièce moulée pour véhicule et procédé de fixation de capuchon d'extrémité de moulage

(30) Priority: 26.09.2011 JP 2011208945
(43) Date of publication of application: 27.03.2013
(73) Proprietor: AISIN SEIKI KABUSHIKI KAISHA, Kariya-shi, Aichi-ken 448-8650 (JP)
(72) Inventor: Yoshida, Koji, Kariya-shi, Aichi-ken, 448-8650 (JP); Okazaki, Hiroshi, Kariya-shi, Aichi-ken, 448-8650 (JP); Nagata, Kanehiro, Kariya-shi, Aichi-ken, 448-8650 (JP); Hanano, Shingo, Kariya-shi, Aichi-ken, 448-8650 (JP)
(74) Representative: Winter, Brandl, Fürniss, Hübner, Röss, Kaiser, Polte - Partnerschaft mbB

(56) References cited:
- DE-U1- 9 408 725
- JP-A- 2005 104 168
- JP-A- 2006 069 229
- JP-A- 2008 018 895

## Description

### TECHNICAL FIELD

This disclosure generally relates to a moulding for a vehicle and a method for attaching a moulding end cap.

### BACKGROUND DISCUSSION

A moulding for a vehicle is attached, or installed, for example to an edge of an opening for an window provided on a door panel of the vehicle for garnishing, or decorating, an exterior of the vehicle. The moulding for the vehicle includes a moulding body and a moulding end cap. The moulding body in an elongated form attaches to the vehicle, for example, along the edge of the opening for the window. The moulding end cap attaches to an end portion in a longitudinal direction of the moulding body. The moulding end cap is provided with a cap portion that covers an end surface in the longitudinal direction of the moulding body. Structures for attaching a moulding end cap to a moulding body has been disclosed previously.

JP2005-104168A, hereinafter referred to as Reference 1, discloses a moulding end cap provided with a hook portion that engages with a moulding body. The moulding end cap disclosed in Reference 1 includes a cap portion and a cap retaining portion. The cap portion is arranged facing to an end surface in a longitudinal direction of the moulding body so that the cap portion covers the end surface in the longitudinal direction. The cap retaining portion connects to the cap portion and extends in the longitudinal direction of the moulding body. The cap retaining portion faces a side portion of the moulding body. The hook portion is formed on the cap retaining portion. The hook portion engages with a recessed portion formed on the side portion provided close to an end portion in the longitudinal direction of the moulding body. The hook portion is provided on a plate spring attached to the moulding end cap in advance. The hook portion springs back and engages with the recessed portion with a spring back force generated by the plate spring, so that the moulding end cap rigidly attaches to the moulding body. The hook portion is provided with a slanted surface slanted relative to an axis in the longitudinal direction of the moulding body and a gravitationally vertical surface perpendicular to the axis in the longitudinal direction of the moulding body. Even in a situation where a location of the recessed portion is formed at the location slightly different from a predetermined location, a portion of the slanted surface of the hook portion engages with an edge portion of the recessed portion so that the moulding end cap is retained to the moulding body. Moreover, even in a situation where the recessed portion is provided with a size smaller than a predetermined size, the gravitationally vertical surface of the hook portion engages with the edge portion of the recessed portion, so that the moulding end cap is retained to the moulding body.

JP2003-118384A, hereinafter referred to as Reference 2, discloses a method for retaining a moulding end cap to a moulding body. In Reference 2, the moulding end cap provided with a fitting portion, or a retaining portion, is inserted from an opening at an end surface in a longitudinal direction of the moulding body. A resin pin is driven through an attachment hole provided on a side portion of the moulding body and then through another attachment hole provided on the fitting portion of the moulding end cap, so that the moulding end cap is retained to the moulding body.

According to the structure for attaching the moulding end cap to the moulding body disclosed in Reference 1, the moulding body and the moulding end cap are designed so that a clearance in consideration of an error in size of the recessed portion, which is formed at the side portion of the end portion of the moulding body in the longitudinal direction, is intentionally provided between the recessed portion of the moulding body and the hook portion of the moulding end cap. The clearance is filled due to the spring back force of the plate spring. Nevertheless, in a high temperature situation where the spring back force of the plate spring decreases, the clearance remains. The clearance lowers a tensile load, which is the load required to pull off the moulding end cap from the moulding body, when the moulding end cap is pulled in the longitudinal direction of the moulding body.

According to the method for attaching the moulding end cap to the moulding body disclosed in Reference 2, the method includes a process in which an attachment hole is formed on each of the moulding body and the moulding end cap and a process in which a resin pin is driven through the attachment holes. Accordingly, number of processes for attaching the moulding end cap to the moulding body increases, which in turn increases manufacturing cost.

A need thus exists for a moulding for a vehicle and a method for attaching a moulding end cap, where processes for attaching the moulding end cap to a moulding body is simple and which prevents decrease of tensile load in a high temperature situation at the same time.

### SUMMARY

According to an aspect of this disclosure, a moulding for a vehicle includes a moulding body made of resin, configured to attach to the vehicle, formed in an elongated form, provided with an end surface in a longitudinal direction of the moulding body and a side portion. The moulding for the vehicle also includes a moulding end cap, which is made of a resin material different from the resin the moulding body is made of, provided with a cap portion and a cap retaining portion. The cap portion covers the end surface in the longitudinal direction of the moulding body by arranging the cap portion in contact with the end surface in the longitudinal direction of the moulding body. The cap retaining portion connects to the cap portion and extends therefrom such that the cap retaining portion faces the side portion of the moulding body along the longitudinal direction of the moulding body. The cap retaining portion is provided with an embedded portion embedded in the side portion of the moulding body embedded by ultrasonic welding.

Accordingly, the moulding end cap formed with the resin material different from the resin used for forming the moulding body is attached to the moulding body by the ultrasonic welding. An welding robot or a similar equipment provides the ultrasonic welding without difficulties. The ultrasonic welding is without processes for providing attachment holes and for driving a resin pin through the attachment holes. Accordingly, the moulding end cap may be attached to the moulding body without complex processes. The ultrasonic horn, which is provided for the ultrasonic welding, the ultrasonic horn in an ultrasonic vibration state applies pressure to the cap retaining portion in a direction in which the cap retaining portion is pressed to the side portion of the moulding body. Due to the ultrasonic vibration that melts the cap retaining portion and the moulding body and the pressure the ultrasonic horn applies, the melted portion of the cap retaining portion is embedded in the moulding body from the direction of the side portion of the moulding body. An embedded portion extends in a thickness direction from the side portion of the moulding body, which is in a direction perpendicular relative to the side portion, a direction perpendicular to the longitudinal direction of the moulding body. As a result, the embedded portion interferes with the moulding body in a case where the moulding end cap is pulled in the longitudinal direction of the moulding body. The interfering state of the embedded portion against the moulding body does not greatly change even in a high temperature condition. As a result, the tensile load of the moulding end cap is kept large even in the high temperature condition. Accordingly, the moulding for the vehicle may provide the moulding end cap configured to attach to the moulding body with simple processes and without decreasing a tensile load in the high temperature situation.

According to another aspect of this disclosure, the moulding for the vehicle is provided with a length of the embedded portion that equals to or greater than 0.25 mm.

The length of the embedded portion that equals to or greater than 0.25 mm is favorable because in a state where the embedded portion is equal to or greater than 0.25 mm, the tensile load of the moulding end cap significantly increases. Accordingly, the moulding for the vehicle provided with sufficient quality for the tensile load may be provided.

According to further aspect of this disclosure, the moulding for the vehicle is characterized by the cap retaining portion provided with multiple numbers of embedded portions, each of which is embedded in a corresponding portion along the longitudinal direction of the moulding body.

The cap retaining portion is provided with multiple numbers of embedded portions, each of which is embedded in the corresponding portion provided along the longitudinal direction of the moulding body. Embedding the cap retaining portion in the moulding body along the longitudinal direction of the moulding body at multiple portions by the ultrasonic welding may enhance the tensile load of the moulding end cap significantly. Accordingly, the moulding for the vehicle well satisfying the quality for the tensile load may be provided.

According to another aspect of this disclosure, a method for attaching a moulding end cap to a moulding body configured to attach to a vehicle, where the moulding body is made of resin, formed in an elongated form, and provided with an end surface in a longitudinal direction of the moulding body and with a side portion and where the moulding end cap is made of a resin material different from the resin used for the moulding body and provided with a cap portion covering the end surface in the longitudinal direction of the moulding body and with a cap retaining portion that connects to the cap portion, includes an end cap arranging process in which the moulding end cap is arranged to be in a state where the cap portion is placed at the end surface in the longitudinal direction of the moulding body and the cap retaining portion is in contact with the side portion of the moulding body, and an ultrasonic welding process in which a tip surface of a contact portion of an ultrasonic horn provided for ultrasonic welding is arranged in contact with the cap retaining portion and the moulding body, the ultrasonic welding process in which the ultrasonic horn in a state of ultrasonic vibration applies pressure to the cap retaining portion in a direction the cap retaining portion presses the side portion of the moulding body, the ultrasonic welding process in which the moulding end cap is welded to the moulding body, where melted or softened cap retaining portion is embedded in melted or softened side portion of the moulding body as a result of melting or softening the cap retaining portion and the moulding body in addition to the applied pressure from the ultrasonic horn, where melting of the cap retaining portion and the moulding body is provided by a frictional heat due to the vibration of the ultrasonic horn and softening of the cap retaining portion and the moulding body is provided by the vibration of the ultrasonic horn.

Accordingly, the moulding end cap formed with the resin material different from the resin used for forming the moulding body is attached to the moulding body by the ultrasonic welding. The welding robot or the similar equipment provides the ultrasonic welding without difficulties. The ultrasonic welding is without the processes for providing attachment holes and for driving the resin pin through the attachment holes. Accordingly, the moulding end cap may be attached to the moulding body without complex processes. The ultrasonic horn, which is provided for the ultrasonic welding, the ultrasonic horn in the ultrasonic vibration state applies pressure to the cap retaining portion in the direction in which the cap retaining portion is pressed to the side portion of the moulding body. Due to the ultrasonic vibration that melts the cap retaining portion and the moulding body and the pressure the ultrasonic horn applies, the melted portion of the cap retaining portion is embedded in the moulding body from the direction of the side portion of the moulding body. The embedded portion extends in the thickness direction from the side portion of the moulding body, which is in the direction perpendicular relative to the side portion, the direction perpendicular to the longitudinal direction of the moulding body. As a result, the embedded portion interferes with the moulding body in the case where the moulding end cap is pulled in the longitudinal direction of the moulding body. The interfering state of the embedded portion against the moulding body does not greatly change even in the high temperature condition. As a result, the tensile load of the moulding end cap is kept large even in the high temperature condition. Accordingly, the moulding for the vehicle may provide the method for attaching the moulding end cap to the moulding body with the simple processes and without decreasing the tensile load in the high temperature situation.

According to further aspect of this disclosure, the method for attaching the moulding end cap provides an embedding length that equals to or greater than 0.25 mm, where the embedding length corresponds to the length of a portion embedding in the moulding body from the direction of the side portion of the moulding body in the ultrasonic welding process.

The length of the portion embedding in the moulding body, or the embedded portion, that equals to or greater than 0.25 mm is favorable because in the state where the embedded portion is equal to or greater than 0.25 mm, the tensile load of the moulding end cap significantly increases. Accordingly, the moulding for the vehicle provided with sufficient quality for the tensile load may be provided.

According to another aspect of this disclosure, the method for attaching the moulding end cap utilizes the ultrasonic horn provided with a recess at a tip surface of the contact portion.

The ultrasonic horn is provided with the recess at the tip surface of the contact portion. In the recess, the burrs produced when the cap retaining portion and the moulding body melt due to the ultrasonic welding are contained. As a result, the burrs are prevented from exposing to an outside portion of a product, particularly around an outer peripheral portion of the ultrasonic horn.

According to further aspect of this disclosure, the method for attaching the moulding end cap is characterized by the ultrasonic horn arranged such that the ultrasonic horn contacts the cap retaining portion and the moulding body in multiple positions along the longitudinal direction of the moulding body in the ultrasonic welding process.

The ultrasonic horn is arranged such that the ultrasonic horn contacts the cap retaining portion and the moulding body in multiple positions along the longitudinal direction of the moulding body in the ultrasonic welding process. Embedding the cap retaining portion in the moulding body along the longitudinal direction of the moulding body at multiple portions by the ultrasonic welding may enhance the tensile load of the moulding end cap significantly. Accordingly, the moulding for the vehicle well satisfying the quality for the tensile load may be provided.

According to another aspect of this disclosure, the method for attaching the moulding end cap further includes a process that provides the side portion of the moulding body with a garnishing surface garnishing an exterior of the vehicle and an inner surface on a reverse side of the garnishing surface, a process that provides the moulding body with a lip retaining portion in an elongated form configured to retain a lip that contacts a vehicle part along the longitudinal direction of the moulding body, the moulding body bent in a direction in which the lip retaining portion faces the inner surface of the moulding body in the longitudinal direction of the moulding body, and an ultrasonic cutting process in which a portion of the lip retaining portion is cut and removed through a process of cutting the lip retaining portion in the longitudinal direction from an end surface of the lip retaining portion with an ultrasonic cutter. The end cap arranging process includes a process of arranging the moulding end cap to be in a state where the cap retaining portion contacts the inner surface of the moulding body, the inner surface that faces a portion the ultrasonic cutting process removes.

Removing a portion of the lip retaining portion by the ultrasonic cutter exposes the inner surface side of the moulding body, which was covered by the cut and removed portion. The moulding end cap is arranged such that the cap retaining portion contacts the exposed inner surface of the moulding body. With such state provided, the ultrasonic horn is activated so that the cap retaining portion is embedded in the inner surface of the moulding body. Thus, the moulding end cap is welded to the moulding body by the ultrasonic welding. The welding robot or the similar equipment provides the ultrasonic welding without difficulties. Accordingly, the moulding body may be attached to the moulding end cap with simple manufacturing processes.

### BRIEF DESCRIPTION OF THE DRAWINGS

The foregoing and additional features and characteristics of this disclosure will become more apparent from the following detailed description considered with the reference to the accompanying drawings, wherein:
Fig. 1 is an exploded perspective view of a moulding for a vehicle according to a first embodiment;
Fig. 2 is a front view illustrating a moulding body;
Fig. 3 is a cross-sectional view of the moulding body taken along line III-III in Fig. 2;
Fig. 4 is a cross-sectional view of the moulding body taken along line IV-IV in Fig. 2;
Fig. 5 is a front view illustrating the moulding body before cut;
Fig. 6 is a drawing viewed from a longitudinal direction of the moulding body illustrating a positional relationship between the moulding body before cut set up to a cutting apparatus and initial positions of ultrasonic cutters;
Fig. 7 is a drawing viewed from a direction perpendicular to the longitudinal direction of the moulding body before cut illustrating the positional relationship between the moulding body before cut set up to the cutting apparatus and the initial positions of the ultrasonic cutters;
Fig. 8 is a cross-sectional view of a moulding end cap arranged to the moulding body taken in the direction perpendicular to the longitudinal direction of the moulding body;
Fig. 9 is a perspective view of an ultrasonic horn;
Fig. 10 is a front view of the ultrasonic horn;
Fig. 11 is a side view of the ultrasonic horn;
Fig. 12 is a cross-sectional view of a contact portion of the ultrasonic horn taken along line XII-XII in Fig. 10;
Fig. 13 is a drawing showing an arrangement position of the ultrasonic horn relative to the moulding body and the cap retaining portion;
Fig. 14 is a drawing viewed from the direction perpendicular to the longitudinal direction of the moulding body showing positions where tip surfaces of the contact portion of the ultrasonic horn contact the moulding body and the cap retaining portion;
Fig. 15 is a drawing illustrating a state where the cap retaining portion is welded to the moulding body made of resin by ultrasonic welding;
Fig. 16 is an enlarged view illustrating a portion D in Fig. 15 in detail;
Fig. 17 is a drawing illustrating a state where the contact portions of the ultrasonic horn is pulled out from the cap retaining portion;
Fig. 18 is a drawing showing an embedding length X and a stroke length Y;
Fig. 19 is a drawing showing a measuring method for a tensile load F;
Fig. 20 is a graph showing a relationship between the stroke length Y and the tensile load F; and
Fig. 21 is a graph showing a relationship between the embedding length X and the tensile load F.

### DETAILED DESCRIPTION

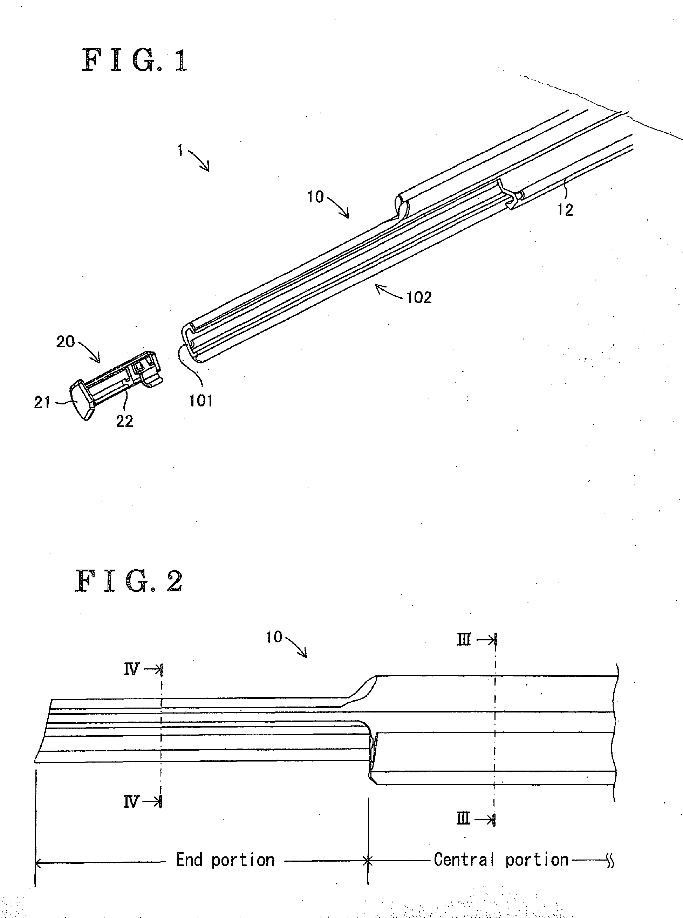

A moulding 1 for a vehicle according to a first embodiment will be described as follows. Fig. 1 is an exploded perspective view of the moulding 1 for the vehicle according to the first embodiment. As Fig. 1 illustrates, the moulding 1 for the vehicle includes a moulding body 10 and a moulding end cap 20. The moulding body 10 is formed in an elongated form and provided with an end surface 101 in a longitudinal direction and a side portion 102. The side portion 102 is a portion that an external outline of a cross section of the moulding body 10 taken in a direction perpendicular to the longitudinal direction of the moulding body 10 defines. The moulding body 10 is formed by an extrusion or a similar method. The moulding end cap 20 is formed by injection molding or a similar method. The moulding end cap 20 is formed separately from the moulding body 10. After the moulding end cap 20 is formed separately, the moulding end cap 20 is attached to the moulding body 10 to an end portion in the longitudinal direction of the moulding body 10. The moulding 1 for the vehicle according to the first embodiment is a belt moulding that attaches to a lower edge of an opening for a window formed on a door panel of the vehicle.

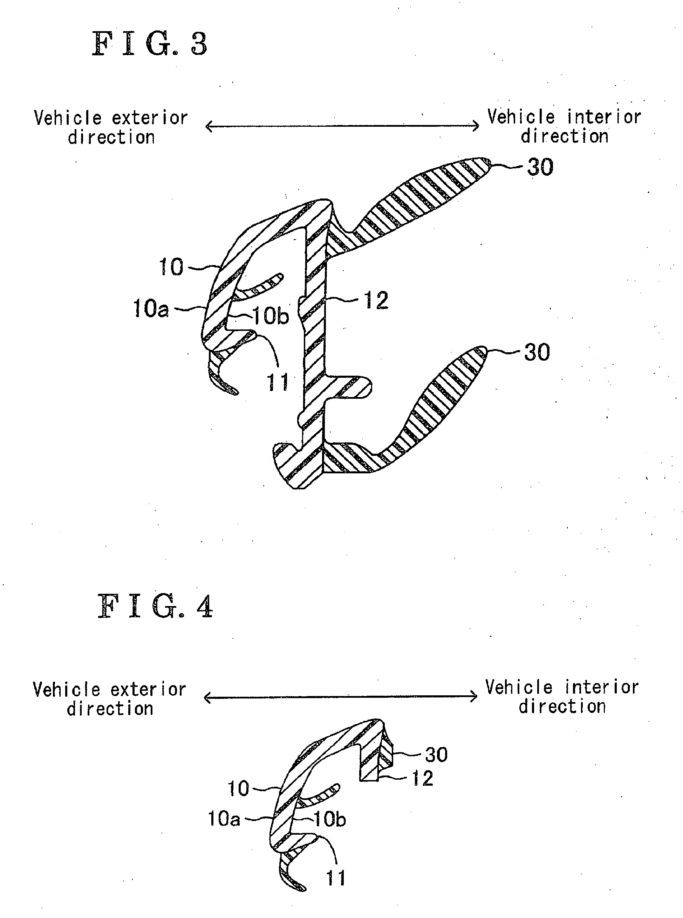

Fig. 2 is a front view illustrating the moulding body 10 mainly around the end portion in the longitudinal direction of the moulding body 10. Fig. 3 is a cross-sectional view of the moulding body 10 taken along line III-III in Fig. 2, which is a portion near a central portion in the longitudinal direction of the moulding body 10. Fig. 4 is a cross-sectional view of the moulding body 10 taken along line IV-IV in Fig. 2, which is a portion near the end portion in the longitudinal direction of the moulding body 10. As Figs. 3 and 4 illustrate, on the side portion 102, which is the portion that the external outline of the cross section of the moulding body 10 taken in the direction perpendicular to the longitudinal direction of the moulding body 10 defines, a garnishing surface 10a and an inner surface 10b are formed. The garnishing surface 10a faces a vehicle exterior direction in a state where the moulding 1 for the vehicle is attached to the lower edge of the opening for the window and garnishes, or decorates, vehicle exterior. The inner surface 10b provided on a reverse side of the garnishing surface 10a defines the reverse side of the garnishing surface 10a. At the lower end portion of the garnishing surface 10a and the inner surface 10b, a protrusion 11 bent in the direction of the inner surface 10b is provided.

As Fig. 3 illustrates, the moulding body 10 is provided with a lip retaining portion 12. The lip retaining portion 12 extends from upward end portions of the garnishing surface 10a and the inner surface 10b of the moulding body 10 to a downward direction, where the upward and the downward directions correspond to the upward and downward directions of Fig. 3. The lip retaining portion 12 extends such that the lip retaining portion 12 faces the inner surface 10b. Accordingly, at a cross-sectional position shown in Fig. 3, the inner surface 10b of the moulding body 10 is covered by the lip retaining portion 12. Two lips 30 are attached to the lip retaining portion 12. Each of the lips 30 is formed in an elongated form along the longitudinal direction of the lip retaining portion 12. The lips 30 contact an window pane installed to the door panel of the vehicle with a fibrous material or a similar material between the lips 30 and the window pane, in a state where the moulding 1 for the vehicle is installed to the lower end portion of the opening for the window provided on the door panel of the vehicle. The lips 30 improve insulation against noise and prevent entry of rain drops to vehicle interior.

As Fig. 4 illustrates, at the end portion in the longitudinal direction of the moulding body 10, a large portion of the lip retaining portion 12 and the lips 30 are cut and removed. Accordingly, at a cross-sectional position shown in Fig. 4, the inner surface 10b of the moulding body 10 is exposed, or not covered by the lip retaining portion 12.

As Fig. 1 illustrates, the moulding end cap 20 is provided with a cap portion 21 and a cap retaining portion 22. The cap portion 21 is formed in a flat plate form. In a state where the moulding end cap 20 is attached to the moulding body 10, the cap portion 21 is in contact with the end surface 101 in the longitudinal direction of the moulding body 10 so that the end surface 101 in the longitudinal direction of the moulding body 10 is covered. The cap retaining portion 22 extends from a surface of the cap portion 21. The cap retaining portion 22 is arranged such that the cap retaining portion 22 faces the inner surface 10b of the moulding body in a state where the moulding end cap 20 is attached to the moulding body 10.

The moulding body 10 and the moulding end cap 20 are made of different resin materials. In the moulding 1 for the vehicle according to the first embodiment, the moulding body 10 is made of polypropylene, which may be abbreviated as PP. The moulding end cap 20 is made of polyacetal, which may be abbreviated as POM.

A method for attaching the moulding end cap 20 to the moulding body 10 of the moulding 1 for the vehicle provided with the aforementioned structure will be described next.

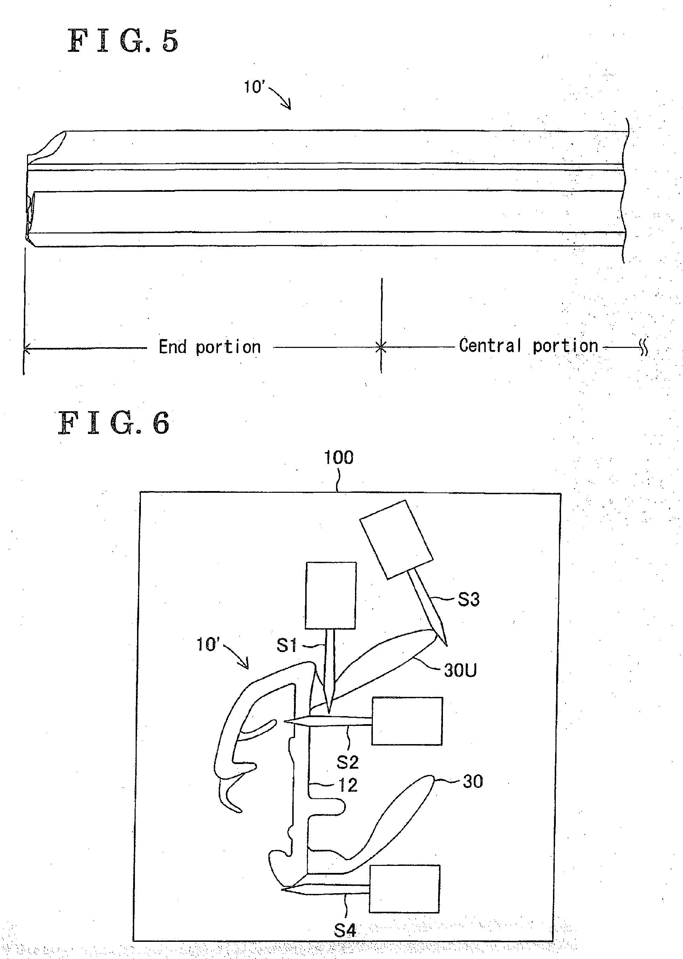

Manufacturing process for providing each part, or component, composing the moulding 1 for the vehicle is as follows. A moulding body 10' before cut and a moulding end cap 20 are formed by resin. The moulding body 10' before cut is an intermediate part for providing the moulding body 10. Fig. 5 is a front view illustrating the moulding body 10' before cut. The cross-sectional shape of the moulding body 10' before cut at the end portion in the longitudinal direction of the moulding body 10' before cut is provided with the same shape as the cross-sectional shape of the central portion of the moulding body 10' before cut. The cross-sectional shape of the moulding body 10' before cut is provided with the same shape as the cross-sectional shape of the central portion of the moulding body 10, which is illustrated in Fig. 3. In other words, the moulding body 10' before cut is a component before the lip retaining portion 12 and the lips 30, which are formed at the end portion in the longitudinal direction of the moulding body 10' before cut, are cut and removed. The moulding body 10 is formed when the lip retaining portion 12 and the lips 30 at the end portion in the longitudinal direction of the moulding body 10' before cut are cut and removed by an ultrasonic cutting process, which will be described later. The moulding body 10' before cut is formed by extrusion or a similar method, so that the moulding body 10' before cut is provided with a unique cross-section along the longitudinal direction. The moulding end cap 20 is formed by injection molding or a similar method.

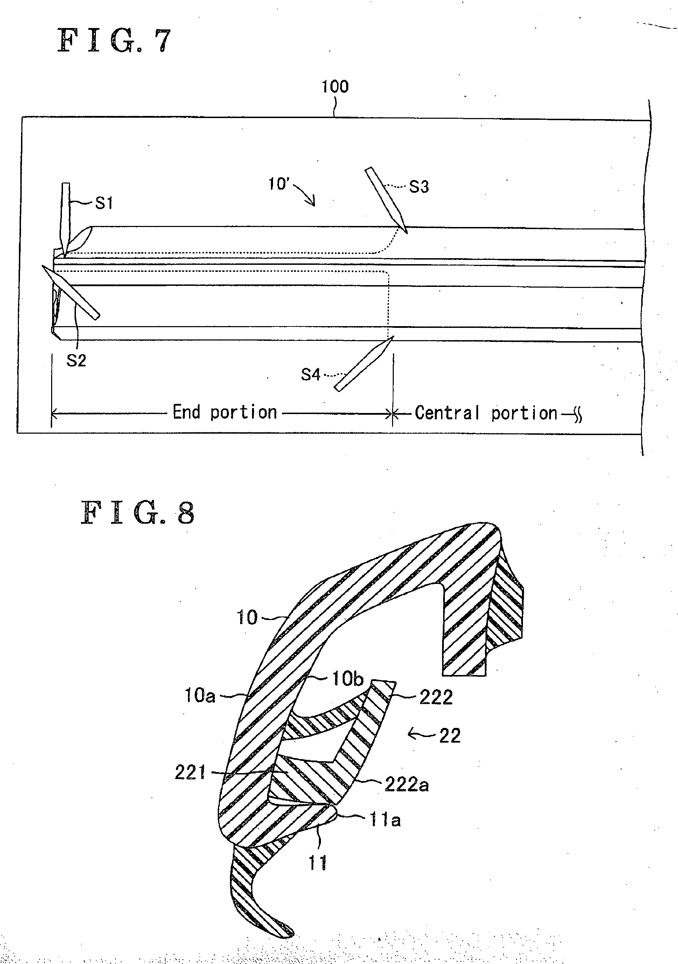

The ultrasonic cutting process is described next. The moulding body 10' before cut is set up on a cutting apparatus 100 provided with ultrasonic cutters. Fig. 6 is a drawing viewed from the longitudinal direction of the moulding body 10' before cut illustrating a positional relationship between the moulding body 10' before cut set up on the cutting apparatus 100 and initial positions of ultrasonic cutters. Fig. 7 is a drawing viewed from a direction perpendicular to the longitudinal direction of the moulding body 10' before cut illustrating the positional relationship between the moulding body 10' before cut set up on the cutting apparatus 100 and the initial positions of the ultrasonic cutters. As Figs. 6 and 7 illustrate, the cutting apparatus 100 is provided with four ultrasonic cutters S1, S2, S3, S4. The initial position of the ultrasonic cutter S1 is in a contact state at an end surface in the longitudinal direction of the moulding body 10' before cut at a location near a root portion of an upper lip 30U, which is one of the two lips 30 provided on the lip retaining portion 12. The upper lip 30U is the lip 30 provided in the upward direction relative to the other lip 30. The initial position of the ultrasonic cutter S2 is in a contact state at the end surface in the longitudinal direction of the moulding body 10' before cut at an upper portion of the lip retaining portion 12, where the upper direction corresponds to the upward direction of Fig. 6. The initial position of the ultrasonic cutter S3 is in a contact state at an end portion of the upper lip 30U at a location near a borderline between the central portion and the end portion in the longitudinal direction of the moulding body 10' before cut. The initial position of the ultrasonic cutter S4 is in a contact state at the lower end portion of the lip retaining portion 12 at a location near a border line between the central portion and the end portion in the longitudinal direction of the moulding body 10' before cut.

After the moulding body 10' before cut is set up on the cutting apparatus 100, the ultrasonic cutter S1 and the ultrasonic cutter S2, each of the ultrasonic cutters S1, S2 in a state of ultrasonic vibration, are moved in the longitudinal direction of the moulding body 10' before cut from the initial position of each of the ultrasonic cutters S1, S2. The movement of the ultrasonic cutter S1 provides a separation of the root portion of the upper lip 30U from the moulding body 10' before cut in the longitudinal direction of the moulding body 10' before cut. The movement of the ultrasonic cutter S2 provides a separation of the lip retaining portion 12 from the moulding body 10' before cut in the longitudinal direction of the moulding body 10' before cut.

After the moulding body 10' before cut is provided with the separations of the upper lip 30U and the lip retaining portion 12 by the ultrasonic cutter S1 and the ultrasonic cutter S2, where each of the separations extends to the location near the borderline between the central portion and the end portion in the longitudinal direction of the moulding body 10' before cut, the ultrasonic cutters S1, S2 are returned to the initial position for each of the ultrasonic cutters S1, S2. After the ultrasonic cutters S1, S2 are returned to the initial position for each of the ultrasonic cutters S1, S2, the ultrasonic cutter S3 in a state of ultrasonic vibration is moved from the initial position for the ultrasonic cutter S3 to the position where the separation provided by the ultrasonic cutter S1 formed along the longitudinal direction of the moulding body 10' before cut ends. Accordingly, the upper lip 30U formed at the end portion in the longitudinal direction of the moulding body 10' before cut is cut and removed. After the upper lip 30U is removed, the ultrasonic cutter S3 is returned to the initial position for the ultrasonic cutter S3. After the ultrasonic cutter S3 is returned to the initial position for the ultrasonic cutter S3, the ultrasonic cutter S4 in a state of ultrasonic vibration is moved from the initial position for the ultrasonic cutter S4 to the position where the separation provided by the ultrasonic cutter S2 formed along the longitudinal direction of the moulding body 10' before cut ends. Accordingly, the lip retaining portion 12 formed at the end portion in the longitudinal direction of the moulding body 10' before cut is cut and removed. After the lip retaining portion 12 is removed, the ultrasonic cutter S4 is returned to the initial position for the ultrasonic cutter S4. Cut processes provided in the ultrasonic cutting process cut and remove a large portion of the upper lip 30U and the lip retaining portion 12 formed at the end portion in the longitudinal direction of the moulding body 10' before cut, which in turn exposes the inner surface 10b of the moulding body 10 covered by the portion of the moulding body 10' before cut thereof. The ultrasonic cutting process provides the moulding body 10 shown in Fig. 3 from the moulding body 10' before cut.

An end cap arranging process is described next. The moulding end cap 20 is arranged at the end portion in the longitudinal direction of the moulding body 10 provided by the ultrasonic cutting process. The moulding end cap 20 is arranged relative to the moulding body 10 in a state where the cap portion 21 of the moulding end cap 20 is arranged to cover the end surface 101 in the longitudinal direction of the moulding body 10 and the cap retaining portion 22 of the moulding end cap 20 is arranged such that the cap retaining portion 22 faces the inner surface 10b at the end portion in the longitudinal direction of the moulding body 10.

Fig. 8 is a cross-sectional view of the moulding end cap 20 arranged to the moulding body 10 taken in the direction perpendicular to the longitudinal direction of the moulding body 10. As Fig. 8 illustrates, the cap retaining portion 22 of the moulding end cap 20 is provided with a base 221 and a flat plate portion 222. The base 221 of the cap retaining portion 22 contacts a portion of the inner surface 10b, the portion exposed in the ultrasonic cutting process. The base 221 is vertically arranged relative to the contact portion such that the base 221 extends in the rightward direction in Fig. 8. The flat plate portion 222 is formed to extend in substantially upward direction in Fig. 8 from the base 221 of the cap retaining portion 22. The length of the base 221 in the extending direction is substantially equal to the length of the protrusion 11 of the moulding body 10. Accordingly, position of an end surface 221 a in the extending direction of the base 221 substantially aligns with the position of the edge surface 11 a of the protrusion 11. The position of the end surface 221 a of the base 221 and the position of the edge surface 11a of the protrusion 11 may or may not be aligned.

An ultrasonic welding process is described next. The moulding body 10 arranged with the moulding end cap 20 is brought to an ultrasonic welding device. The ultrasonic welding device is provided with an ultrasonic horn 40 used for ultrasonic welding. In general, ultrasonic welding is used for the purpose of bonding by self-bonding melted resin material of a same kind. In this disclosure, one part is embedded in the other part by the ultrasonic welding, so that resin materials of different kinds are welded. Accordingly, the moulding body 10 and the moulding end cap 20 made of different resin materials are welded by the ultrasonic welding.

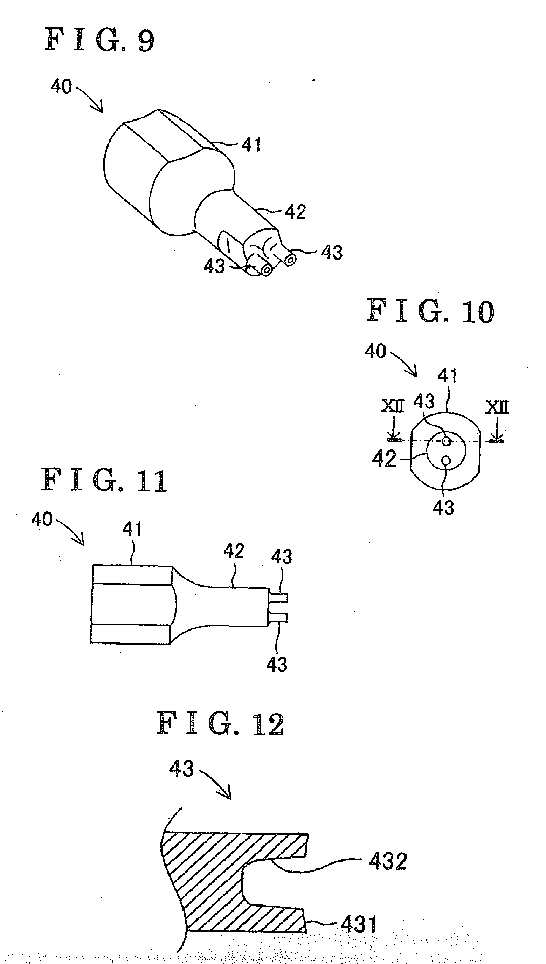

Figs. 9, 10, 11, and 12 illustrate the ultrasonic horn 40 used for the moulding 1 for the vehicle according to the first embodiment. Fig. 9 is a perspective view of the ultrasonic horn 40. Fig. 10 is a front view of the ultrasonic horn 40. Fig. 11 is a side view of the ultrasonic horn 40. Fig. 12 is a cross-sectional view of the contact portion of the ultrasonic horn taken along line XII-XII in Fig. 10. As Figs. 9, 10, 11, and 12 illustrate, the ultrasonic horn 40 is provided with a base portion 41, a middle portion 42, and contact portions 43. The base portion 41 of the ultrasonic horn 40 is formed in a cylindrical form having a substantially elliptical cross-sectional shape. The base portion 41 of the ultrasonic horn 40 is formed with across flats on a side periphery. The base portion 41 of the ultrasonic horn 40 is in contact with an ultrasonic vibrator. The middle portion 42 provided with a cylindrical form is continuously formed with the base portion 41. A diameter of the middle portion 42 is smaller than the diamter of the base portion 41. At the end surface of the middle portion 42, two contact portions 43 are formed side by side. The contact portions 43 are the portions that contact materials welded by the ultrasonic welding. As Fig. 12 illustrates, a recess 432 is formed at a tip surface 431 of each of the contact portions 43. In the moulding 1 for the vehicle according to the first embodiment, an outside diameter of each of the contact portions 43, which is a dotting diameter of the ultrasonic horn 40, is 3 mm.

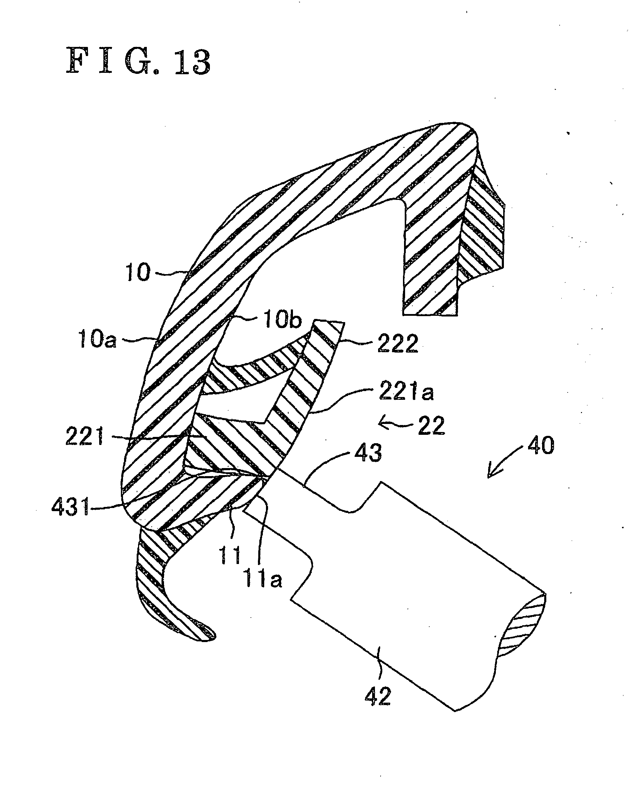

The ultrasonic horn 40 provided with an aforementioned structure is arranged relative to the moulding body 10 and the moulding end cap 20. Fig. 13 illustrates the arrangement position of the ultrasonic horn 40 relative to the moulding body 10 and the cap retaining portion 22 of the moulding end cap 20. As Fig. 13 illustrates, the ultrasonic horn 40 is arranged so that the tip surface 431 of each of the contact portions 43 contact the end surface 221a of the base 221 of the cap retaining portion 22 and the edge surface 11 a of the protrusion 11 of the moulding body 10 simultaneously.

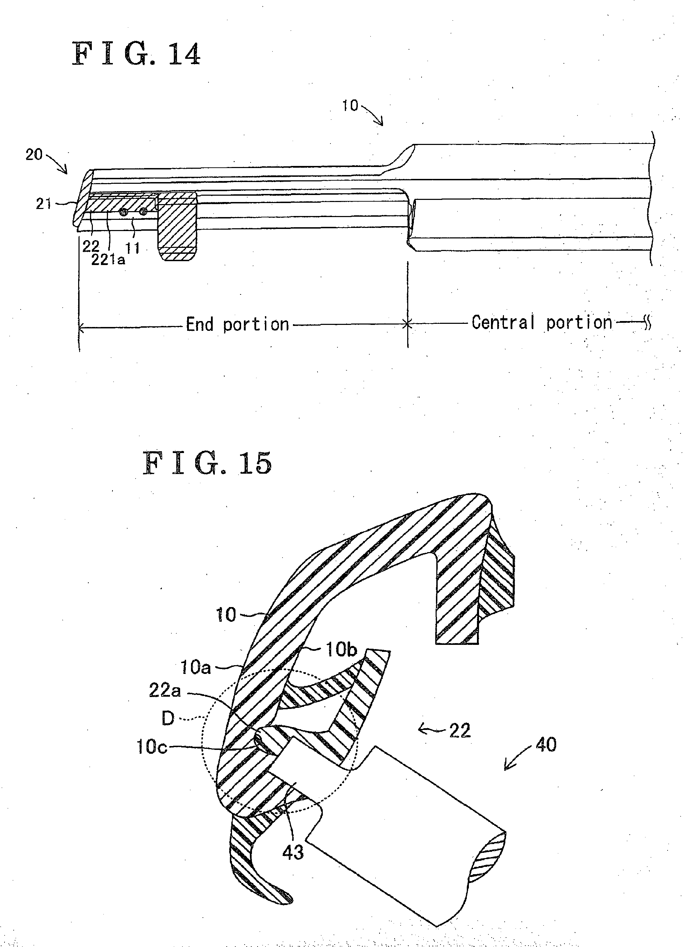

Fig. 14 is a drawing viewed from the direction perpendicular to the longitudinal direction of the moulding body 10 showing positions where the tip surfaces 431 of the contact portions 43 of the ultrasonic horn 40 contact the moulding body and the cap retaining portion 22. A portion indicated with hatched lines in Fig. 14 shows a state where the moulding end cap 20 is arranged. A position indicated with black dot shows where the tip surface 431 of each of the contact portions 43 of the ultrasonic horn 40 contacts the moulding body 10 and the cap retaining portion 22. As Fig. 14 illustrates, the tip surface 431 of each of the contact portions 43 contacts a portion where the cap retaining portion 22 and the moulding body 10 at the protrusion 11 contact. In other words, the tip surface 431 of each of the contact portions 43 contact the cap retaining portion 22 and the moulding body 10 at the protrusion 11 simultaneously. Two contact portions 43 contact two positions in the longitudinal direction of the moulding body 10. Each of the two contact portions 43 contacts the cap retaining portion 22 and the moulding body 10 at the protrusion 11 simultaneously.

After arranging the ultrasonic horn 40 in the aforementioned state relative to the moulding body 10 and the moulding end cap 20, the ultrasonic horn 40 activated to an ultrasonic vibrating state applies pressure to the cap retaining portion 22. At this time, the ultrasonic horn 40 applies pressure to the cap retaining portion 22 such that the cap retaining portion 22 is pressed to the inner surface 10b of the moulding body 10. The ultrasonic vibration of the ultrasonic horn 40 is transmitted to the moulding body 10 and the cap retaining portion 22, so that the moulding body 10 and the cap retaining portion 22 vibrate. Due to the frictional heat produced by the vibration, a portion of the moulding body 10 and a portion of the cap retaining portion 22 melt.

With the melting of the cap retaining portion 22, the contact portions 43 of the ultrasonic horn 40 that apply pressure to the cap retaining portion 22 are squeezed into the cap retaining portion 22 in the direction in which the pressure is applied. The inner surface 10b side of the moulding body 10 is melted or softened due to the ultrasonic vibration. The melted portions of the cap retaining portion 22 are squeezed into, or embedded in, the moulding body 10 from the direction of the melted or softened inner surface 10b side of the moulding body 10 due to the pressure applied from the ultrasonic horn 40. Accordingly, the moulding end cap 20 is welded to the moulding body 10 by the ultrasonic welding due to the cap retaining portion 22 embedded in the moulding body 10.

Fig. 15 is a drawing illustrating a state where the cap retaining portion 22 is welded to the moulding body 10 by the ultrasonic welding. As Fig. 15 illustrates, the contact portions 43 of the ultrasonic horn 40 is squeezed into the cap retaining portion 22. Due to the ultrasonic vibration, the moulding body 10 and the cap retaining portion 22 are melted or softened. In addition, the ultrasonic horn 40 pressing the cap retaining portion 22 applies pressure to the inner surface 10b of the moulding body 10 so that the melted portions of the cap retaining portion 22 are embedded in the inner surface 10b side of the moulding body 10. Accordingly, depressed portions 10c are formed on the inner surface 10b of the moulding body 10 so that embedded portions 22a embedded in the depressed portions 10c are formed on the cap retaining portion 22 simultaneously. Each contact portion 43 forms an embedded portion 22a corresponding to each contact portion 43. In the moulding 1 for the vehicle according to the first embodiment, two contact portions 43 are in contact with the moulding body 10 and the cap retaining portion 22 simultaneously in the longitudinal direction of the moulding body 10. As a result, two embedded portions 22a are formed in separate locations in the longitudinal direction of the moulding body 10. The locations of the two embedded portions 22a are substantially at the same location as the positions indicated with the black dots in Fig. 14.

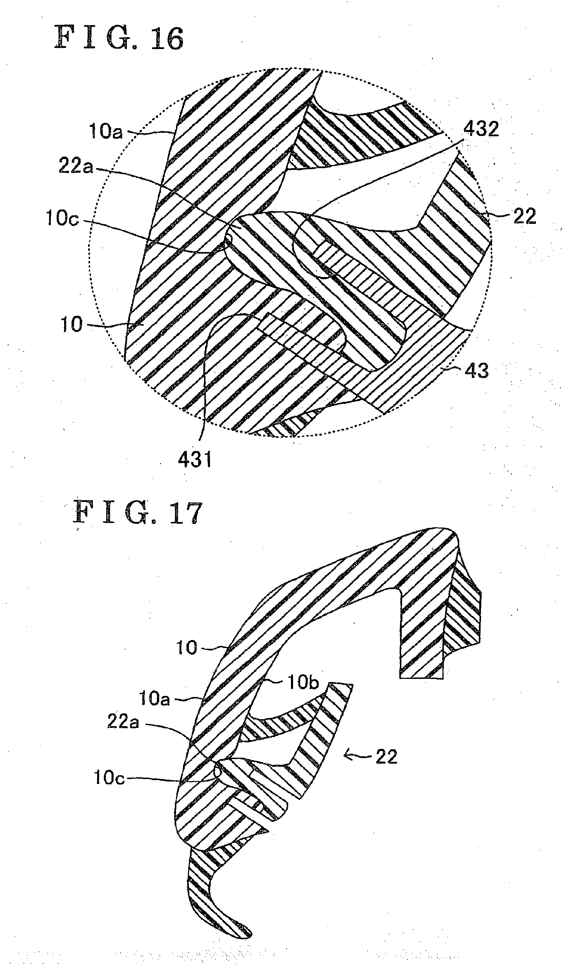

Fig. 16 is an enlarged view illustrating a portion D in Fig. 15 in detail. As Fig. 16 illustrates, in the recess 432 formed on the tip surface 431 of each of the contact portions 43 of the ultrasonic horn 40, a burr produced when the cap retaining portion 22 melts and a burr produced when the moulding body 10 melts are contained.

The contact portions 43 are pulled out of the cap retaining portion 22 after a length the contact portions 43 of the ultrasonic horn 40 squeezed into the cap retaining portion 22, which is a stroke length Y to be described later, is reached to a predetermined length or after the pressing force is reached to a predetermined value. Fig. 17 is a drawing illustrating a state where the contact portions 43 of the ultrasonic horn 40 is pulled out from the cap retaining portion 22. As Fig. 17 illustrates, at a portion where each of the contact portions 43 is pulled out, a burr, which is the burrs contained in the recess 432 of each of the contact portions 43 combined, is formed in a protruding form. Thus, through the aforementioned processes, the moulding end cap 20 is attached to the moulding body 10.

According to the method for attaching the moulding end cap 20 using the ultrasonic welding for the moulding 1 for the vehicle according to the first embodiment, the cap retaining portion 22 of the moulding end cap 20 is formed with the embedded portions 22a embedded in the moulding body 10 from the direction of the inner surface 10b of the moulding body 10 by the ultrasonic welding. Each of the embedded portions 22a extends in a thickness direction from the inner surface 10b of the moulding body 10 toward the garnishing surface 10a, which is in a direction perpendicular to the longitudinal direction of the moulding body 10. Accordingly, In a case where the moulding end cap 20 attached to the moulding body 10 is pulled in the longitudinal direction of the moulding body 10, the embedded portions 22a formed on the cap retaining portion 22 interfere with the depressed portions 10c of the moulding body 10. As a result, the moulding end cap 20 is prevented from pulled out in the longitudinal direction of the moulding body 10.

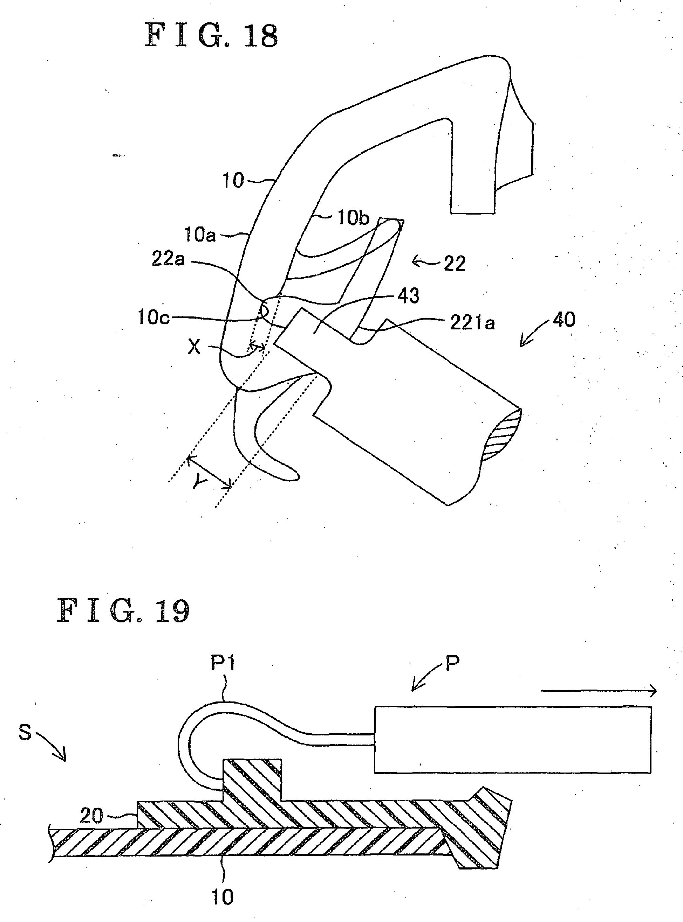

Fig. 18 is a drawing showing an embedding length X and the stroke length Y. The embedding length X is the length of the embedded portion 22a formed on the cap retaining portion 22 of the moulding end cap 20 embedded in the moulding body 10 by the ultrasonic welding. The stroke length Y is the length the contact portions 43 of the ultrasonic horn 40 in ultrasonic vibration state are squeezed into the cap retaining portion 22. The embedding length X is the length along the direction perpendicular to the inner surface 10b, or the thickness direction, the direction along which the embedded portion 22a is embedded in the moulding body 10 from the direction of the inner surface 10b. The stroke length Y is the length the contact portions 43 are squeezed into the cap retaining portion 22 from the end surface 221 a of the base 221 of the cap retaining portion 22 in the direction the pressure is applied to.

In a case where the moulding end cap 20 welded to the moulding body 10 by the ultrasonic welding is pulled in the longitudinal direction of the moulding body 10, a load for pulling out the moulding end cap 20 from the moulding body 10, which is a tensile load F, is considered to depend on the embedding length X of the embedded portion 22a. The embedding length X of the embedded portion 22a is considered to depend on the stroke length Y of the contact portions 43 of the ultrasonic horn 40. In order to understand effects the embedding length X and the stroke length Y have on the tensile load F, a multiple number of samples S of the moulding body 10 with the moulding end cap 20 welded by the ultrasonic welding are produced by providing different stroke length Y to each sample S. The embedding length X and the tensile load F are measured for each sample S.

Fig. 19 is a drawing showing a measuring method for the tensile load F. As Fig. 19 illustrates, a measuring needle P1 of a push-pull gauge P is hooked to the moulding end cap 20 of the sample S, and then the push-pull gauge P is pulled in the longitudinal direction of the moulding body 10. The load the push-pull gauge P at which the moulding end cap 20 is pulled out from the moulding body 10 is measured as the tensile load F. X-rays of each sample S is taken and the embedding length X for each sample S is measured.

Table 1 shows the measurement results.

**<TABLE 1>**

| No. | Stroke length Y (mm) | Moved length Z (mm) | Embedding length X (mm) | Tensile load F (N) | | |
|---|---|---|---|---|---|---|
| | | | | 1st measurement | 2nd measurement | Average |
| 1 | 3.5 | 0.5 | 0.13 | 38.2 | 25.2 | 31.7 |
| 2 | 3.5 | 0.8 | 0.2 | 31.8 | 52.6 | 42.2 |
| 3 | 3.5 | 0.2 | 0.075 | 21.9 | 46.9 | 34.4 |
| 4 | 3.0 | 0.5 | 0.1 | 21.7 | 16.2 | 19.0 |
| 5 | 3.0 | 0.8 | 0.05 | 17.6 | 19.3 | 18.5 |
| 6 | 3.0 | 0.2 | 0.075 | 16.7 | 13.7 | 15.2 |
| 7 | 4.0 | 0.5 | 0.25 | 133.2 | 122.2 | 127.7 |
| 8 | 4.0 | 0.8 | 0.35 | 129.8 | 123.8 | 126.8 |
| 9 | 4.0 | 0.2 | 0.425 | 117.5 | 125.0 | 121.3 |

In Table 1, a moved length Z is a length that the contact portions 43 are moved in the direction the pressure is applied in a state where the ultrasonic vibration state of the ultrasonic horn 40 is discontinued. As Table 1 shows, a correlation between the moved length Z and the tensile load F is small.

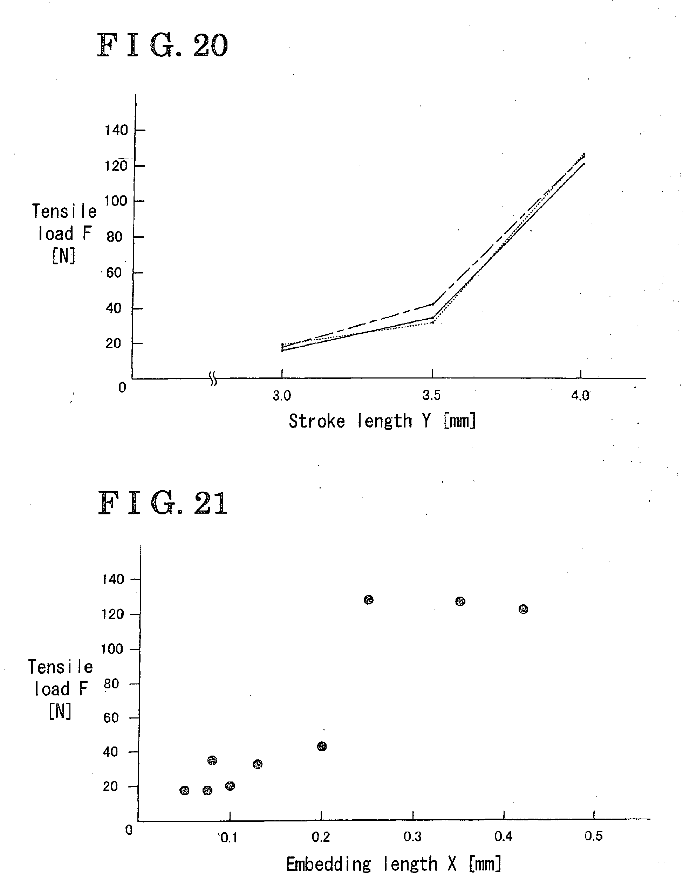

Fig. 20 is a graph showing a relationship between the stroke length Y and the tensile load F, which is obtained from Table 1. Fig. 21 is a graph showing a relationship between the embedding length X and the tensile load F obtained from Table 1.

As Fig. 20 shows, the tensile load F measured in a case where the stroke length Y is 4.0 mm is considerably larger compared with the tensile load F measured in a case where the stroke length Y is less than 4.0 mm. As a result, the stroke length Y is favorable in a case where the stroke length Y is equal to or greater than 4.0 mm. As Fig. 21 shows, the tensile load F measured in a case where the embedding length X is equal to or greater than 0.25 mm is considerably larger compared with the tensile load F measured in a case where the embedding length X is less than 0.25 mm. Accordingly, the embedding length X is favorable in a case where the embedding length X is equal to or greater than 0.25 mm for welding the moulding end cap 20 to the moulding body 10 by the ultrasonic welding.

The moulding 1 for the vehicle according to the first embodiment is provided with the moulding body 10 made of resin configured to attach to the vehicle and the moulding end cap 20 made of resin. The moulding body 10 is formed in an elongated form and provided with the end surface 101 in the longitudinal direction of the moulding body 10 and the side portion 102. The moulding end cap 20 is provided with the cap portion 21 and the cap retaining portion 22. The cap portion 21 covers the end surface 101 in the longitudinal direction of the moulding body 10 by arranging the cap portion 21 in contact with the end surface 101 in the longitudinal direction of the moulding body 10. The cap retaining portion 22 is connected to the cap portion 21 and extends from the cap portion 21 along the longitudinal direction of the moulding body 10 such that the cap retaining portion 22 faces the inner surface 10b at the end portion in the longitudinal direction of the moulding body 10. The moulding body 10 and the moulding end cap 20 are made of different resin materials. The cap retaining portion 22 is formed with the embedded portions 22a embedded in the inner surface 10b of the moulding body 10 by the ultrasonic welding.

The method for attaching the moulding end cap 20 to the moulding 1 for the vehicle according to the first embodiment includes the end cap arranging process and the ultrasonic welding process. In the end cap arranging process, the cap portion 21 of the moulding end cap 20 is arranged such that the cap portion 21 covers the end surface 101 in the longitudinal direction of the moulding body 10. At the same time, the cap retaining portion 22 of the moulding end cap 20 is arranged such that the cap retaining portion 22 contacts the inner surface 10b of the moulding body 10. In the ultrasonic welding process, the tip surface 431 of each of the contact portions 43 of the ultrasonic horn 40 provided for the ultrasonic welding is arranged in contact with the cap retaining portion 22 and the moulding body 10. The ultrasonic horn 40 in the state of ultrasonic vibration applies pressure to the cap retaining portion 22 in the direction the cap retaining portion 22 presses the inner surface 10b side of the moulding body 10. The moulding end cap 20 is welded to the moulding body 10, where melted or softened cap retaining portion 22 is embedded in melted or softened inner surface 10b of the moulding body 10 as a result of melting or softening the cap retaining portion 22 and the moulding body 10 in addition to the applied pressure from the ultrasonic horn 40, where melting of the cap retaining portion 22 and the moulding body 10 is provided by the frictional heat due to the vibration of the ultrasonic horn 40 and softening of the cap retaining portion 22 and the moulding body 10 is provided by the vibration of the ultrasonic horn 40.

According to the moulding 1 for the vehicle according to the first embodiment, the moulding end cap 20 formed with a resin material different from the resin used for forming the moulding body 10 is attached to the moulding body 10 by the ultrasonic welding. An welding robot or a similar equipment provides the ultrasonic welding without difficulties. Accordingly, the moulding body 10 may be attached to the moulding end cap 20 with simple manufacturing processes.

The ultrasonic horn 40, which is provided for the ultrasonic welding, in ultrasonic vibration state applies pressure to the cap retaining portion 22 in the direction in which the cap retaining portion 22 is pressed to the inner surface 10b side of the moulding body 10. Due to the ultrasonic vibration that melts the cap retaining portion 22 and the moulding body 10 and the pressure the ultrasonic horn 40 applies, the melted portions of the cap retaining portion 22 are embedded in the moulding body 10 from the direction of the inner surface 10b of the moulding body 10. Each of the portions being embedded, which is the embedded portion 22a, extends in the thickness direction from the inner surface 10b side of the moulding body 10, which is in the direction perpendicular relative to the inner surface 10b, the direction perpendicular to the longitudinal direction of the moulding body 10. As a result, the embedded portions 22a interfere with the moulding body 10 in the case where the the moulding end cap 20 is pulled in the longitudinal direction of the moulding body 10. The interfering state of the embedded portions 22a against the moulding body 10 does not greatly change even in a high temperature condition. As a result, the tensile load of the moulding end cap 20 is kept large even in the high temperature condition.

Accordingly, the moulding 1 for the vehicle according to the first embodiment, may provide the moulding 1 for the vehicle and the method for attaching the moulding end cap 20 configured to attach the moulding end cap 20 to the moulding body 10 with simple processes and without decreasing the tensile load in the high temperature situation.

According to the moulding 1 for the vehicle according to the first embodiment, the tensile load F of the moulding end cap 20 is sufficiently large in a situation where the length of the embedded portion 22a, which is the embedding length X, is equal to or greater than 0.25 mm. According to the moulding 1 for the vehicle according to the first embodiment, the tenisile load F of the moulding end cap 20 is sufficiently large in a situation where the stroke length Y is equal to or greater than 4 mm. As a result, the moulding 1 for the vehicle that sufficiently satisfies the tensile load F may be provided by making the embedding length X equal to or greater than 0.25 mm or by making the stroke length Y equal to or greater than 4 mm.

The cap retaining portion 22 is provided with the embedded portions 22a in two locations along the longitudinal direction of the moulding body 10. Providing multiple numbers of embedded portions 22a along the longitudinal direction of the moulding body 10 may enhance the tensile load F of the moulding end cap 20 significantly.

The tip surface 431 of each of the contact portions 43 of the ultrasonic horn 40 is provided with the recess 432. In the recess 432, the burrs produced when the cap retaining portion 22 and the moulding body 10 melt due to the ultrasonic welding are contained. As a result, the burrs are prevented from exposing to an outside portion of a product. The moulding 1 for the vehicle according to the first embodiment uses the ultrasonic horn 40 provided with each of the contact portions 43 having 3 mm outside diameter. In a case where the ultrasonic horn 40 is provided with each of the contact portions 43 having 5 mm outside diameter for welding the moulding end cap 20 to the moulding body 10 by the ultrasonic welding, rough burrs are formed in peripheral portions of the contact portions 43. The formations of the rough burrs spoil the exterior design of the product after the welding viewed from the direction of the inner surface 10b. The outside diameter of each of the contact portions 43, which is the dotting diameter of the ultrasonic welding, is favorable in the case where the outside diameter is around 3 mm.

The moulding body 10 is provided with the lip retaining portion 12 in the elongated form configured to retain the lips 30. The moulding body 10 is bent such that the lip retaining portion 12 faces the inner surface 10b of the moulding body 10 in the longitudinal direction of the moulding body 10. The lips 30 formed on the lip retaining portion 12 contact the window pane installed to the door panel of the vehicle, so that provides insulation against noise and prevents entry of rain drops to the vehicle interior. The end portion in the longitudinal direction of the moulding body 10 contacts, for example, a garnish of the door frame of the vehicle. Accordingly, the lip retaining portion 12 and the lips 30 are not provided at the end portion in the longitudinal direction of the moulding body 10. Thus the lip retaining portion 12 and the lips 30 are cut and removed from the end portion in the longitudinal direction of the moulding body 10.

In a case where a moulding for a vehicle is provided with a recessed portion for attaching a moulding end cap to a moulding body at a side portion of an end portion in a longitudinal direction of the moulding body, a form of a lip retaining portion removed from the end portion in the longitudinal direction of the moulding body becomes complex. In such case, the lip retaining portion is removed by a press work. Nevertheless, providing the press work to cut and remove, or trim, the lip retaining portion requires making of a press die, which in turn significantly increases a cost for investment in equipment. In comparison, the moulding 1 for the vehicle according to the first embodiment is configured to attach the moulding end cap 20 to the moulding body 10 by the ultrasonic welding, which is without the aforementioned recessed portion provided at the side portion of the end portion in the longitudinal direction of the moulding body 10. Accordingly, the form of the lip retaining portion 12 removed may be simplified. The lip retaining portion 12 may be cut and removed by the ultrasonic cutters. The ultrasonic cutters are less expensive compared to making a press die, so that the cost for investment in equipment is reduced. Without additional investment in equipment, the ultrasonic cutters may adapt to various vehicle types by changing the movement locus of the ultrasonic cutters.

Removing a portion of the lip retaining portion 12 by the ultrasonic cutters exposes the inner surface 10b side of the moulding body 10, the portion covered by the cut and removed portion. The moulding end cap 20 is arranged such that the exposed inner surface 10b of the moulding body 10 contact the cap retaining portion 22, so that the moulding end cap 20 is welded to the moulding body 10 by the ultrasonic welding without difficulty.

Applications of the moulding 1 for the vehicle is not limited to the aforementioned embodiment. For example, if a condition where the moulding end cap 20 is formed of a resin material different from the resin used to form the moulding body 10 satisfies, the moulding end cap 20 that attaches to the moulding body 10 may be made of a resin material different form the POM resin, and the moulding body 10 may be made of a resin material different from the PP resin, as in the case with the moulding 1 for the vehicle according to the first embodiment. Using different resin materials having similar melting points for the moulding body 10 and the moulding end cap 20 is favorable. The moulding 1 for the vehicle according to the first embodiment is described with the method for attaching the moulding end cap 20 to the belt moulding, however, the moulding 1 for the vehicle is not limited to the belt moulding and may be applied to the moulding 1 for the vehicle in a case where the moulding 1 is provided with the moulding body 10 configured to attach to the vehicle and the moulding end cap 20 that attaches to the end portion in the longitudinal direction of the moulding body 10. Accordingly, the applications of the moulding 1 for the vehicle may be modified provided that the intent is similar.

## Claims

1. A moulding (1) for a vehicle, comprising:
a moulding body (10) made of resin, configured to attach to a vehicle, formed in an elongated form provided with an end surface (101) in a longitudinal direction of the moulding body (10) and a side portion (102);
a moulding end cap (20) made of a resin material different from the resin the moulding body (10) is made of, provided with a cap portion (21) and a cap retaining portion (22);
the cap portion (21) covering the end surface (101) in the longitudinal direction of the moulding body (10) by arranging the cap portion (21) in contact with the end surface (101) in the longitudinal direction of the moulding body (10);
the cap retaining portion (22) that connects to the cap portion (21) and extends therefrom facing the side portion (102) of the moulding body (10) along the longitudinal direction of the moulding body (10); **characterised in that**
the cap retaining portion (22) provided with an embedded portion (22a) embedded in the side portion (102) of the moulding body (10) embedded by ultrasonic welding.

2. The moulding (1) for the vehicle according to Claim 1, wherein a length of the embedded portion (22a) is equal to or greater than 0.25 mm.

3. The moulding (1) for the vehicle according to Claim 1, wherein the cap retaining portion (22) is provided with a plurality of embedded portions (22a), each of which is embedded in a corresponding portion along the longitudinal direction of the moulding body (10).

4. A method for attaching a moulding end cap (20) to a moulding body (10) configured to attach to a vehicle, where the moulding body (10) is made of resin, formed in an elongated form, and provided with an end surface (101) in a longitudinal direction of the moulding body (10) and with a side portion (102) and where the moulding end cap (20) is made of a resin material different from the resin used for the moulding body (10) and provided with a cap portion (21) covering the end surface (101) in the longitudinal direction of the moulding body (10) and with a cap retaining portion (22) that connects to the cap portion (21), **characterised by**:
an end cap arranging process in which the moulding end cap (20) is arranged to be in a state where the cap portion (21) is placed at the end surface (101) in the longitudinal direction of the moulding body (10) and the cap retaining portion (22) is in contact with the side portion (102) of the moulding body (10); and
an ultrasonic welding process in which a tip surface (431) of a contact portion (43) of an ultrasonic horn (40) provided for the ultrasonic welding is arranged in contact with the cap retaining portion (22) and the moulding body (10), the ultrasonic welding process in which the ultrasonic horn (40) in a state of ultrasonic vibration applies pressure to the cap retaining portion (22) in a direction the cap retaining portion (22) presses the side portion (102) of the moulding body (10), the ultrasonic welding process in which the moulding end cap (20) is welded to the moulding body (10), where melted or softened cap retaining portion (22) is embedded in melted or softened side portion (102) of the moulding body (10) as a result of melting or softening the cap retaining portion (22) and the moulding body (10) in addition to the applied pressure from the ultrasonic horn (40), where melting of the cap retaining portion (22) and the moulding body (10) is provided by a frictional heat due to the vibration of an ultrasonic horn (40) and softening of the cap retaining portion (22) and the moulding body (10) is provided by the vibration of the ultrasonic horn (40).

5. The method for attaching the moulding end cap (20) according to Claim 4, wherein the method provides an embedding length (X) equal to or greater than 0.25 mm, where the embedding length (X) corresponds to the length of a portion embedding in the moulding body (10) from the direction of the side portion (102) of the moulding body (10) in the ultrasonic welding process.

6. The method for attaching the moulding end cap (20) according to Claims 4 or 5, wherein the method utilizes the ultrasonic horn (40) provided with a recess (432) at a tip surface (431) of the contact portion (43).

7. The method for attaching the moulding end cap (20) according to any one of Claims 4 to 6, wherein the ultrasonic horn (40) is arranged to contact the cap retaining portion (22) and the moulding body (10) in multiple positions along the longitudinal direction of the moulding body (10) in the ultrasonic welding process.

8. The method for attaching the moulding end cap (20) according to any one of Claims 4 to 7, further comprising:
a process providing the side portion (102) of the moulding body (10) with a garnishing surface (10a) garnishing an exterior of the vehicle and an inner surface (10b) on a reverse side of the garnishing surface (10a);
a process providing the moulding body (10) with a lip retaining portion (12) in an elongated form configured to retain a lip (30) that contacts a vehicle part along the longitudinal direction of the moulding body (10), the moulding body (10) bent in a direction in which the lip retaining portion (12) faces the inner surface (10b) of the moulding body (10) in the longitudinal direction of the moulding body (10); and
an ultrasonic cutting process in which a portion of the lip retaining portion (12) is cut and removed through a process of cutting the lip retaining portion (12) in the longitudinal direction from an end surface of the lip retaining portion (12) with an ultrasonic cutter, wherein
said end cap arranging process includes a process of arranging the moulding end cap (20) to be in a state where the cap retaining portion (22) contacts the inner surface (10b) of the moulding body (10), the inner surface (10b) that faces a portion the ultrasonic cutting process removes.

## Patentansprüche

1. Profil (1) für ein Fahrzeug mit:
einem Profilkörper (10), der aus Kunstharz hergestellt ist, der zum Befestigen an einem Fahrzeug konfiguriert ist, und der in einer länglichen Form ausgebildet ist, die mit einer Endfläche (101) in einer Längsrichtung des Profilkörpers (10) und einem Seitenabschnitt (102) versehen ist;
einer Profilendkappe (20), die aus einem Kunstharzmaterial hergestellt ist, das unterschiedlich von dem Kunstharz ist, aus dem der Profilkörper (10) hergestellt ist, und die mit einem Kappenabschnitt (21) und einem kappenhaltenden Abschnitt (22) versehen ist; wobei
der Kappenabschnitt (21) die Endfläche (101) in der Längsrichtung des Profilkörpers (10) bedeckt, indem der Kappenabschnitt (21) in Kontakt mit der Endfläche (101) in der Längsrichtung des Profilkörpers (10) angeordnet wird; wobei
der kappenhaltende Abschnitt (22), der mit dem Kappenabschnitt (21) verbunden ist und sich davon erstreckt, dem Seitenabschnitt (102) des Profilkörpers (10) entlang der Längsrichtung des Profilkörpers (10) gegenübersteht;
**dadurch gekennzeichnet, dass**
der kappenhaltende Abschnitt (22) mit einem eingebetteten Abschnitt (22a) versehen ist, der in dem Seitenabschnitt (102) des Profilkörpers (10) eingebettet ist, wobei er mittels Ultraschallschweißen eingebettet ist.

2. Profil (1) für das Fahrzeug nach Anspruch 1, wobei eine Länge des eingebetteten Abschnitts (22a) größer oder gleich 0,25 mm ist.

3. Profil (1) für das Fahrzeug nach Anspruch 1, wobei der kappenhaltende Abschnitt (22) mit einer Vielzahl von eingebetteten Abschnitten (22a) versehen ist, wobei jeder davon in einem zugehörigen Abschnitt entlang der Längsrichtung des Profilkörpers (10) eingebettet ist.

4. Verfahren zum Befestigen einer Profilendkappe (20) an einen Profilkörper (10), der zum Befestigen an einem Fahrzeug konfiguriert ist, wobei der Profilkörper (10) aus Kunstharz hergestellt ist, in einer länglichen Form ausgebildet ist und mit einer Endfläche (101) in einer Längsrichtung des Profilkörpers (10) und einem Seitenabschnitt (102) versehen ist, und wobei die Profilendkappe (20) aus einem Kunstharzmaterial hergestellt ist, das unterschiedlich von dem Kunstharz ist, das für den Profilkörper (10) verwendet wird, und mit einem Kappenabschnitt (21), der die Endfläche (101) in der Längsrichtung des Profilkörpers (10) bedeckt, und einem kappenhaltenden Abschnitt (22), der mit dem Kappenabschnitt (21) verbunden ist, versehen ist,
**gekennzeichnet durch**
einen Endkappen-Anordnungsprozess, in dem die Profilendkappe (20) angeordnet wird, damit sie in einem Zustand ist, in dem der Kappenabschnitt (21) an der Endfläche (101) in der Längsrichtung des Profilkörpers (10) platziert wird und der kappenhaltende Abschnitt (22) in Kontakt mit dem Seitenabschnitt (102) des Profilkörpers (10) ist; und
einem Ultraschall-Schweißprozess, in dem eine Spitzenfläche (431) eines Kontaktabschnitts (43) einer Sonotrode (40), die für das Ultraschallschweißen vorgesehen ist, in Kontakt mit dem kappenhaltenden Abschnitt (22) und dem Profilkörper (10) angeordnet ist, wobei in dem Ultraschall-Schweißprozess die Sonotrode (40) in einem Ultraschallschwingungszustand Druck auf den kappenhaltenden Abschnitt (22) in eine Richtung aufbringt, in die der kappenhaltende Abschnitt (22) auf den Seitenabschnitt (102) des Profilkörpers (10) Druck ausübt, wobei in dem Ultraschall-Schweißprozess die Profilendkappe (20) an den Profilkörper (10) geschweißt wird, wobei der geschmolzene oder aufgeweichte kappenhaltende Abschnitt (22) in den geschmolzenen oder aufgeweichten Seitenabschnitt (102) des Profilkörpers (10) als ein Ergebnis eines Aufschmelzens oder Aufweichens des kappenhaltenden Abschnitts (22) und des Profilkörpers (10) zusätzlich zu dem aufgebrachten Druck von der Sonotrode (40) eingebettet ist, wobei das Aufschmelzen des kappenhaltenden Abschnitts (22) und des Profilkörpers (10) **durch** eine Reibungswärme aufgrund der Schwingung einer Sonotrode (40) bereitgestellt wird und das Aufweichen des kappenhaltenden Abschnitts (22) und des Profilkörpers (10) **durch** die Schwingung der Sonotrode (40) bereitgestellt wird.

5. Verfahren zum Befestigen der Profilendkappe (20) nach Anspruch 4, wobei das Verfahren eine einbettende Länge (X), die größer oder gleich 0,25 mm ist, bereitstellt, wobei die einbettende Länge (X) der Länge eines Abschnitts entspricht, der in den Profilkörper (10) von der Richtung des Seitenabschnitts (102) des Profilkörpers (10) in dem Ultraschall-Schweißprozess eingebettet wird.

6. Verfahren zum Befestigen der Profilendkappe (20) nach Anspruch 4 oder 5, wobei das Verfahren die Sonotrode (40) verwendet, die mit einer Aussparung (432) an einer Spitzenfläche (431) des Kontaktabschnitts (43) versehen ist.

7. Verfahren zum Befestigen der Profilendkappe (20) nach einem der Ansprüche 4 bis 6, wobei die Sonotrode (40) angeordnet wird, um den kappenhaltenden Abschnitt (22) und den Profilkörper (10) in mehreren Positionen entlang der Längsrichtung des Profilkörpers (10) in dem Ultraschall-Schweißprozess zu kontaktieren.

8. Verfahren zum Befestigen der Profilendkappe (20) nach einem der Ansprüche 4 bis 7, das weiterhin enthält:
einen Prozess, der dem Seitenabschnitt (102) des Profilkörpers (10) eine Zieroberfläche (10a) bereitstellt, die eine Außenseite des Fahrzeugs und eine innere Fläche (10b) auf einer Rückseite der Zieroberfläche (10a) verziert;
einen Prozess, der dem Profilkörper (10) einen lippenhaltenden Abschnitt (12) in einer länglichen Form bereitstellt, der konfiguriert ist, eine Lippe (30) zu halten, die ein Fahrzeugteil entlang der Längsrichtung des Profilkörpers (10) kontaktiert, wobei der Profilkörper (10) in eine Richtung gebogen ist, in der der lippenhaltenden Abschnitt (12) der inneren Fläche (10b) des Profilkörpers (10) in der Längsrichtung des Profilkörpers (10) gegenübersteht; und
einem Ultraschall-Schneidprozess, in dem ein Abschnitt des lippenhaltenden Abschnitts (12) geschnitten und entfernt wird durch einen Prozess eines Schneidens des lippenhaltenden Abschnitts (12) in der Längsrichtung von einer Endfläche des lippenhaltenden Abschnitts (12) mit einem Ultraschallmesser, wobei
der Endkappen-Anordnungsprozess einen Prozess eines Anordnens der Profilendkappe (20) enthält, damit sie in einem Zustand ist, in dem der kappenhaltende Abschnitt (22) die innere Fläche (10b) des Profilkörpers (10) kontaktiert, wobei die innere Fläche (10b) einem Abschnitt gegenübersteht, den der Ultraschall-Schneidprozess entfernt.

## Revendications

1. Moulage (1) pour un véhicule, comportant :
un corps de moulage (10) fabriqué en résine, configuré pour se fixer sur un véhicule, formé dans une forme allongée pourvue d'une surface d'extrémité (101) dans une direction longitudinale du corps de moulage (10) et d'une partie latérale (102) ;
un bouchon d'extrémité de moulage (20) fabriqué dans une résine différente de la résine à partir de laquelle le corps de moulage (10) est fabriqué, pourvu d'une partie de bouchon (21) et d'une partie de retenue de bouchon (22) ;
la partie de bouchon (21) recouvrant la surface d'extrémité (101) dans la direction longitudinale du corps de moulage (10) en disposant la partie de bouchon (21) en contact avec la surface d'extrémité (101) dans la direction longitudinale du corps de moulage (10) ;
la partie de retenue de bouchon (22) qui se raccorde à la partie de bouchon (21) et s'étend de la face à la partie latérale (102) du corps de moulage (10) le long de la direction longitudinale du corps de moulage (10) ; **caractérisé en ce que**
la partie de retenue de bouchon (22) pourvue d'une partie incluse (22a) incluse dans la partie latérale (102) du corps de moulage (10) incluse par soudage par ultrasons.

2. Moulage (1) pour le véhicule selon la revendication 1, dans lequel une longueur de la partie incluse (22a) est égale ou supérieure à 0,25 mm.

3. Moulage (1) pour le véhicule selon la revendication 1, dans lequel la partie de retenue de bouchon (22) est pourvue d'une pluralité de parties incluses (22a), dont chacune est incluse dans une partie correspondante le long de la direction longitudinale du corps de moulage (10).

4. Procédé de fixation d'un bouchon d'extrémité de moulage (20) sur un corps de moulage (10) configuré pour se fixer sur un véhicule, où le corps de moulage (10) est fabriqué en résine, formé dans une forme allongée, et pourvu d'une surface d'extrémité (101) dans une direction longitudinale du corps de moulage (10) et d'une partie latérale (102) et où le bouchon d'extrémité de moulage (20) est fabriqué dans une résine différente de la résine utilisée pour le corps de moulage (10) et pourvu d'une partie de bouchon (21) recouvrant la surface d'extrémité (101) dans la direction longitudinale du corps de moulage (10) et d'une partie de retenue de bouchon (22) qui se raccorde à la partie de bouchon (21), **caractérisé par** :
un processus de disposition de bouchon d'extrémité dans lequel le bouchon d'extrémité de moulage (20) est disposé afin d'être dans un état où la partie de bouchon (21) est placée au niveau de la surface d'extrémité (101) dans la direction longitudinale du corps de moulage (10) et la partie de retenue de bouchon (22) est en contact avec la partie latérale (102) du corps de moulage (10) ; et
un processus de soudage par ultrasons dans lequel une surface d'extrémité (431) d'une partie de contact (43) d'une corne à ultrasons (40) prévue pour le soudage par ultrasons est disposée en contact avec la partie de retenue de bouchon (22) et le corps de moulage (10), le processus de soudage par ultrasons dans lequel la corne à ultrasons (40) dans un état de vibration ultrasonique applique une pression sur la partie de retenue de bouchon (22) dans une direction où la partie de retenue de bouchon (22) appuie sur la partie latérale (102) du corps de moulage (10), le processus de soudage par ultrasons dans lequel le bouchon d'extrémité de moulage (20) est soudé sur le corps de moulage (10), où une partie de retenue de bouchon fondue ou ramollie (22) est enfoncée dans la partie latérale fondue ou ramollie (102) du corps de moulage (10) en raison de la fusion ou du ramollissement de la partie de retenue de bouchon (22) et du corps de moulage (10) en plus de la pression appliquée par la corne à ultrasons (40), où la fusion de la partie de retenue de bouchon (22) et du corps de moulage (10) est procurée par une chaleur de friction due à la vibration d'une corne à ultrasons (40) et le ramollissement de la partie de retenue de bouchon (22) et du corps de moulage (10) est procuré par la vibration de la corne à ultrasons (40).

5. Procédé de fixation du bouchon d'extrémité de moulage (20) selon la revendication 4, selon lequel le procédé prévoit une longueur d'inclusion (X) égale ou supérieure à 0,25 mm, où la longueur d'inclusion (X) correspond à la longueur d'une partie incluse dans le corps de moulage (10) depuis la direction de la partie latérale (102) du corps de moulage (10) dans le processus de soudage par ultrasons.

6. Procédé de fixation du bouchon d'extrémité de moulage (20) selon les revendications 4 ou 5, selon lequel le procédé utilise la corne à ultrasons (40) pourvue d'un renfoncement (432) au niveau d'une surface d'extrémité (431) de la partie de contact (43).

7. Procédé de fixation du bouchon d'extrémité de moulage (20) selon l'une quelconque des revendications 4 à 6, où la corne à ultrasons (40) est disposée pour entrer en contact avec la partie de retenue de bouchon (22) et le corps de moulage (10) dans de multiples positions le long de la direction longitudinale du corps de moulage (10) dans le processus de soudage par ultrasons.

8. Procédé de fixation du bouchon d'extrémité de moulage (20) selon l'une quelconque des revendications 4 à 7, comportant en outre :
un processus pourvoyant la partie latérale (102) du corps de moulage (10) d'une surface de garniture (10a) garnissant un extérieur du véhicule et d'une surface intérieure (10b) sur un côté opposé de la surface de garniture (10a) ;
un processus pourvoyant le corps de moulage (10) d'une partie de retenue de lèvre (12) dans une forme allongée configurée pour maintenir une lèvre (30) qui est en contact avec une partie de véhicule le long de la direction longitudinale du corps de moulage (10), le corps de moulage (10) plié dans une direction dans laquelle la partie de retenue de lèvre (12) fait face à la surface intérieure (10b) du corps de moulage (10) dans la direction longitudinale du corps de moulage (10) ; et
un processus de découpe par ultrasons dans lequel une partie de la partie de retenue de lèvre (12) est coupée et enlevée par l'intermédiaire d'un processus de découpe de la partie de retenue de lèvre (12) dans la direction longitudinale depuis une surface d'extrémité de la partie de retenue de lèvre (12) avec un dispositif de coupe par ultrasons, selon lequel
ledit processus de disposition de bouchon d'extrémité comprend un processus de disposition du bouchon d'extrémité de moulage (20) afin d'être dans un état où la partie de retenue de bouchon (22) est en contact avec la surface intérieure (10b) du corps de moulage (10), la surface intérieure (10b) qui fait face à une partie que le processus de découpe par ultrasons enlève.
